# EUROPEAN PATENT APPLICATION

(11) **EP 1 770 974 A1**
(43) Date of publication of application: **04.04.2007**
(21) Application number: 05256157.8
(22) Date of filing: 30.09.2005
(51) Int. Cl.: H04M 3/493

(54) **Audio signal transmission control**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

The present invention relates to the provision of audio information to a user of a remote electronics device, for example the provision of interactive voice response (IVR) system voice prompts. The presenting invention provides a method (200) of transmitting audio signals between an audio source (2) and an electronics device (1) having an audio transducer (405) for transducing the audio signals for a user of the device, the method comprising forwarding a prompt control signal (235) to the audio source in response to detecting a user proximity condition (530Y) corresponding to the user's ear being proximate the audio transducer of the electronics device, and forwarding the audio signals from the audio source to the electronics device (215) in response to receiving the prompt control signal at the audio source.

## Description

### Field of the Invention

The present invention relates to the provision of audio information to a user of a remote electronics device, and in particular though not exclusively to the provision of interactive voice response (IVR) system voice prompts.

### Background of the Invention

Interactive voice response systems (IVR) allow interaction between a user of a remote electronics device such as a phone and a central server or database. Typically the user responds to voice prompts offering a menu of options by actuating a key corresponding to the menu option of interest. For example a bank customer, following logging on to the system, may be offered various services such as a balance for a number of accounts, to transfer money between accounts, or to talk with an operator. By pressing the appropriate keys, the menu system is advanced according to the user responses or menu selections. The phone typically issues a DTMF (Dual Tone Multi-Frequency) tone corresponding to the key actuated, and the server recognises this tone and interprets the corresponding key actuation according to the current menu. Other non-DTMF signal channels are available for certain types of phones, for example ISDN and VoIP data channels.

This arrangement works well for standard telephones having a separate handset and keypad unit, because the user is able to listen to the handset speaker whilst operating the keys. This means that as soon as a key is actuated by the user, the server may issue the next voice prompt; making the system efficient and fast. However with the increasingly ubiquitous presence of mobile and cordless phones having an integrated keypad and speaker unit, IVR type systems are forced to adapt to the user having to move the phone between a "listening" mode in which the handset is against the user's ear, and a "key actuating" mode in which the handset is typically held out in front of the user and away from the ear. The allowance made for mobile, cordless and other unitary phone designs is to introduce a delay between the server receiving a DMTF tone corresponding to a user key actuation and issuing the next voice prompt; in order to allow the user time to move the phone from the "key actuation" mode or position to the "listening" mode or position.

Because of the different variety of user's and handsets that must be catered for, the extent of the delay can be significant and slows down operation of the IVR system, and for some users degrades their experience of the system. Even worse, if a user of a mobile phone is too slow in moving the phone back to their ear after a key actuation, they may miss the next voice prompt. This might occur for example if the user is trying to juggle a number of papers or other devices (eg PDA) to find relevant information for the IVR call, so that moving the phone back to the listening position is delayed. The user will then have to return to the previous menu using an additional key actuation, which further slows the system interaction and degrades the perceived user experience. Thus it is difficult to accommodate all potential users with different degrees of dexterity, hearing capability and familiarity with IVR applications. What is fast for an elderly user who interacts with IVR infrequently or for the first time, may be slow for a regular business user.

### Summary of the Invention

In general terms the present invention provides a method and system for controlling the transmission of audio information such as IVR voice prompts sent between an audio source such as an IVR server and an electronic device such as a remote phone. A proximity condition is detected at the device which is used to control the flow of audio information between the source and the device. For example a second voice prompt may be delayed until the proximity condition is detected which indicates that the user of the device is now ready to receive the second voice prompt. The proximity condition relates to the user being in a position to hear the audio information, for example that the speaker of the device is adjacent the user's ear.

This arrangement allows a slower user to control when audio information is sent to them, for example only when their ear is against a mobile phone. This reduces the risk of missing the next voice prompt in an IVR system interaction for example. A related benefit is that because slower users are catered for, the "standard" delay for other users, who are not juggling many items during the call for example, can be reduced.

In an embodiment a proximity sensor such as an infra-red or capacitance sensor is located in a phone and arranged to detect whether or not an object (eg the user's head) is within a predetermined range of the phone. Such a condition can be used to indicate that the user is now ready to receive audio information. A change in the sensor's status, for example that an object is now within the predetermined range, can be forwarded to the audio source for interpretation. Following an IVR prompt and user key actuation response, the IVR server may await the sensor status change signal corresponding to a predetermined proximity condition, before delivering the next voice prompt. The sensor status signal can be implemented as an in-band audio signal such as a unique DMTF tone sequence not used by the standard IVR application.

In another embodiment, motion sensors are used to detect movement and rotation of a phone in order to correlate these with known movement sequences corresponding to certain proximity conditions, such as the user having moved the phone from a key actuation position to a listening position.

In another aspect there is provided a method of transmitting audio signals between an audio source and an electronics device having an audio transducer for transducing the audio signals for a user of the device, the method comprising, forwarding a prompt control signal to the audio source in response to detecting a predetermined user proximity condition, and forwarding the audio signals from the audio source to the electronics device in response to receiving the prompt control signal at the audio source. The user proximity condition corresponds to the user's ear being proximate the audio transducer of the device, or such that the user can hear the audio signals transduced by the audio transducer. In an embodiment this is implemented using a sensor such as an infra-red or capacitive sensor detecting an object (eg the user's head) within a predetermined range (eg 5cm).

Alternatively, or additionally, the proximity condition may be detected by detecting predetermined orientation and/or movement changes of the electronics device.

In an embodiment, the method further comprises forwarding second audio signals (for example an initial IVR voice prompt) from the audio source to the electronics device, and forwarding a user control response signal to the audio source in response to a user interaction with the electronics device (eg following actuation of a key on the device). This then allows the above method to proceed, by waiting for the user proximity condition before forwarding further audio signals.

In an embodiment, the electronics device is a phone, the audio source is an interactive voice response system and the audio signals are IVR voice prompts.

In an embodiment, the prompt control signal is an in-band audio signal, for example a DMTF tone or sequence of such tones. The audio transducer may be muted during this prompt control signal.

There is also provided a corresponding system for transmitting audio signals, and comprising: an audio source and an electronics device which receives audio signals from the audio source and comprises an audio transducer for transducing the audio signals for a user of the device; means for forwarding a prompt control signal to.the audio source in response to detecting a predetermined user proximity condition; means for forwarding the audio signals from the audio source to the electronics device in response to receiving the prompt control signal at the audio source.

In an embodiment the system uses a sensor for detecting an object within a predetermined range of the audio transducer in order to determine the user proximity condition, and in order to trigger forwarding of the prompt control signal to the audio source in response to detecting a predetermined user proximity condition comprises a sensor.

In an embodiment, the device further comprises a false detection avoidance structure surrounding the sensor, for example raised ridges surrounding the sensor and/or a recess for locating the sensor.

In an embodiment the system further comprises means for forwarding second audio signals from the audio source to the electronics device; and means for forwarding a user control response signal to the audio source in response to a user interaction with the electronics device. The device can also comprise keys for receiving the user interaction.

There is also provided a method associated with the electronic device for controlling the transmission of audio signals between an audio source and the electronics device which has an audio transducer for transducing the audio signals for a user of the device, the method comprises: forwarding a prompt control signal to the audio source in response to detecting a predetermined user proximity condition; and receiving the audio signals from the audio source following the prompt control signal.

Additional features corresponding to the system or method are also provided for the device where appropriate. There is also provided an electronic device suitable for carrying out the above method.

There is also provided a method associated with the audio source for controlling the transmission of audio signals between the audio source and an electronics device having an audio transducer for transducing the audio signals for a user of the device, the method comprising: forwarding first audio signals to the electronics device; determining second audio signals for forwarding to the electronics device in response to receiving a user control response signal from the electronics device; forwarding the second audio signals to the electronics device in response to receiving a predetermined prompt control signal from the electronics device. An example audio source is an IVR server.

Additional features corresponding to the system method are also provided for the audio source where appropriate. There is also provided an audio source suitable for carrying out the above method.

There is also provided software or program code for carrying out the methods disclosed herein. This code may be embodied on a storage medium such as a CD-ROM, or a transport medium such as an Internet download signal.

### Brief Description of the Drawings

Embodiments will now be described with reference to the following drawings, by way of example only and without intending to be limiting, in which:
Figure 1 is a schematic illustrating a system according to an embodiment;
Figure 2 is a flow chart illustrating an IVR method;
Figure 3 is a flow chart illustrating an IVR method according to an embodiment;
Figure 4 illustrates a phone according to an embodiment;
Figure 5 illustrates a method of operating a phone during an IVR application according to an embodiment;
Figure 6 illustrates a method of operating an IVR server according to an embodiment;
Figure 7a illustrates listening and key actuation positions for a user of a mobile phone; and
Figure 7b illustrates rotational movements the phone may go through whilst moving between the two positions of figure 7a.

### Detailed Description

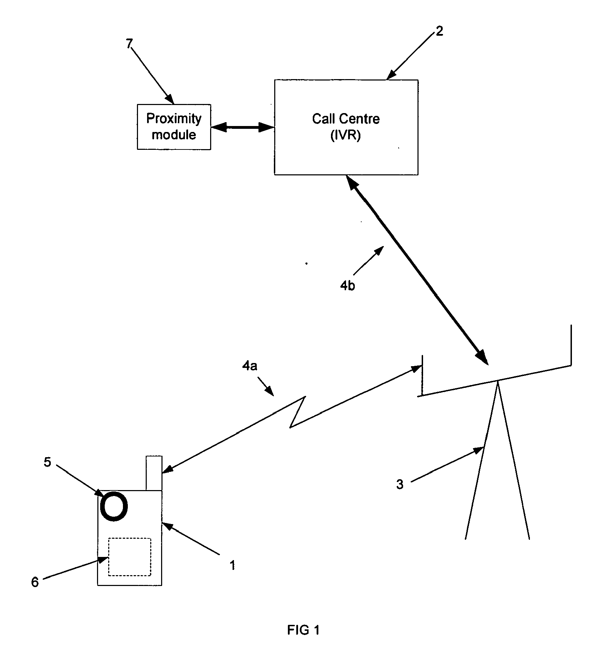

Referring to figure 1, a system according to an embodiment is shown and which comprises an electronics device such as a mobile phone 1, and an audio source such as an IVR (interactive voice response) server 2. The mobile phone 1 and IVR server 2 are connected using a wireless link 4a to a base station 3 and another communications link 4b from the base station 3 to a call centre comprising the IVR server 2. These connections 4 provide an audio or voice channel between the audio source 1 and the remote electronics device 2. The electronic device can be any type of phone, including a wired rather than wireless phone, a PDA, laptop or other electronic device capable of receiving audio information or signals from an audio source.

The system can be configured to provide an IVR prompting service in which, when the phone 1 connects to a call centre equipped with an interactive voice prompt server 2, the IVR server 2 goes through a series of voice prompts in response to user selections at the phone 1. These user selections are typically implemented using key actuations corresponding to menu choices, the choices being relayed to the IVR system using DTMF tones over the open audio channel. Alternatively other in-band or out-of-band signals may be used, including for example the user's voice which may be recognised by the IVR server 2.

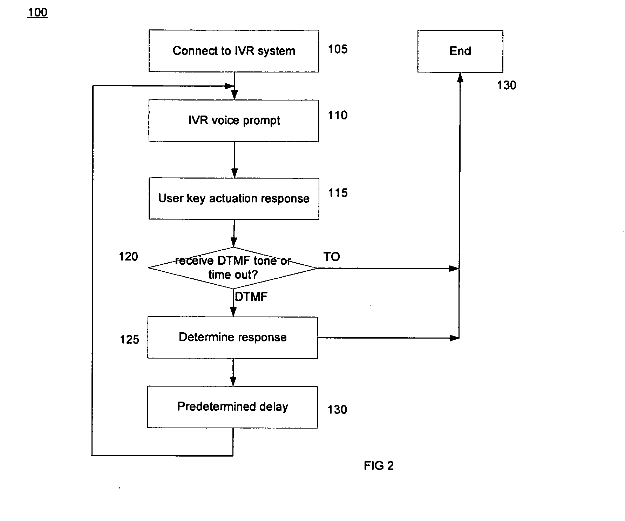

A method illustrating this type of service is shown in figure 2. In the method (100), the phone 1 connects to the IVR server 2 using various handshaking protocols as known (105), in order to provide an open audio channel between the two sides of the system. The IVR server issues voice prompts (110) such as "please enter which account you would like to access; press 1 for check, 2 for savings..." and so on. This allows the user to make a menu selection using the corresponding number, for example by pressing the "1" key on the phone's keypad (115). This causes the phone to issue a DTMF tone onto the audio line or channel which corresponds with the key actuation selecting the desired choice number. If a DTMF tone is received by the IVR server (120DTMF), then the server goes on to determine an appropriate response (125); for example another voice prompt corresponding to another menu of user options. The server will also typically utilise a time out feature such that if the user does not respond within a predetermined time (120TO), the process ends (130).

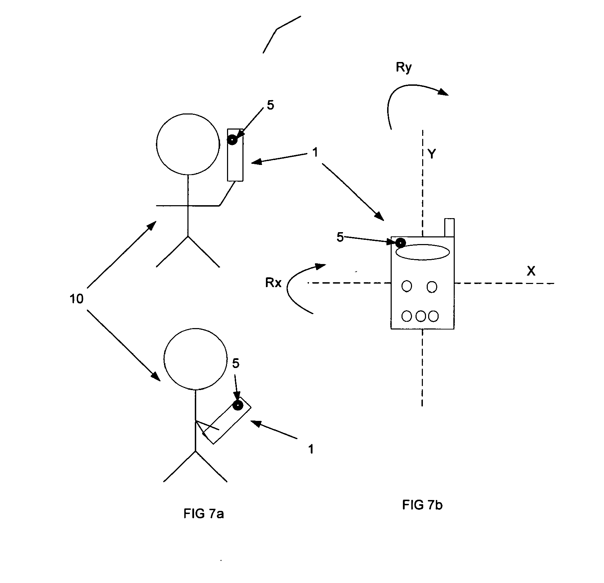

The server also uses a predetermined delay (135) to delay issue of the next voice prompt such as "enter 1 if you would like an account balance, 2 if you would like to transfer money..." and so on. The delay is intended to be sufficient to allow a user who must press keys on a unitary phone having integrated keypad and speaker to move the phone from a key actuation position to a listening position in order to hear the next voice prompt. Key actuation and listening positions using a unitary or integrated phone such as a mobile phone are illustrated in figure 7a. Following the predetermined delay (135), the method 100 then repeats as required in order to deliver further voice prompts (110).

As mentioned above, this arrangement can be problematic for some users of unitary or integrated phones, for example when the user is balancing multiple items on their lap and referring to them during the IVR call or service. For example they may need to retrieve sheets of paper from folders in order to respond to the voice prompts, and it may take them more time than allowed for by the predetermined delay (135) to return the paper and return the phone to their ear in order to hear the next voice prompt. If this occurs, the user will typically need to activate a "return to previous menu" type command and wait for the missed prompt again. This can be time consuming and annoying for the user.

Referring again to figure 1, the phone 1 also includes a proximity sensor or detector 5, together with proximity functionality 6 typically implemented by software installed on the phone 1. The IVR server 2 also comprises a proximity module 7 which uses signals sent by the proximity functionality 6 on the phone 1. The proximity sensor 5 is arranged to detect the presence or absence of an object adjacent the speaker of the phone 1 - for example the user's head. By detecting the proximity of the user's head, the sensor 5 is able to indicate that the phone 1 has been returned to a listening position, such that the user is now ready to receive a voice prompt from the IVR server 2. Using this information, the system can be arranged to delay the issue of a voice prompt until the user is ready to receive it - ie the phone 1 has been returned to a listening position.

The proximity functionality or block 6 monitors the output of the sensor 5 and interprets this as a proximity condition for the phone 1 - for example nearby object as detected by the sensor 5 corresponds to a listening position, and no nearby object detected by the sensor 5 corresponds to a key actuation position. Alternatively the functional block may simply send the sensor readings to the IVR server 2 for interpretation by the proximity module 7. In a further alternative, the proximity block 6 may be configured to simply signal changes in sensor readings corresponding to a proximity condition, for example an object has just been detected within a predetermined range, or an object has just moved outside the predetermined range. A suitable range might be 5 cm for example.

The proximity functionality 6 typically signals the proximity condition or information using an in-band audio signal. This means no additional channels are required between the phone 1 and server 2 in order to transfer this control information. Instead the system uses the open audio channel used to convey the voice prompts from the IVR server and the user DTMF tone responses from the device. Convenient in-band audio signals are DMTF tones which comprise a number of predetermined tone combinations associated with certain numbers and other keys on a reduced phone keypad - for example numbers 1-9, * and # keys. If all of these allocated tones are required for the IVR application, then a combination of these tones may be used, for example the DTMF tone for * followed within a predetermined time by the DTMF tone for #, in order to provide control signals that are distinctive from those used for the IVR application.. Alternatively other in-band audio signals could be used. In order to avoid user distraction, the speaker or the phone may be muted by the proximity functionality 6 during this control signal.

The proximity module 7 associated with the IVR server 2 can then be configured to receive and interpret these DTMF tones or other control signals from the proximity functionality 6 on the phone 1. Thus the proximity module 7 may delay sending the next voice prompt from the IVR server 2 until the user's head is against the speaker of the phone 1.

The system can be configured to switch between a proximity detection mode which uses the above described sensor and proximity functions, and a standard mode which operates without this functionality. This may be accomplished automatically as part of a hand-shaking protocol with certain predetermined applications such as IVR; the proximity detection mode otherwise being switched off on the phone. An IVR application for example may be configured to toggle the phone between these two modes depending on the current stage or state of the application, for example when a "talk to an operator" menu option is selected the IVR application can signal to the phone to switch off the proximity detection functionality. This avoids the user having to hear the proximity detection handshaking signals or DTMF tones. Further, the system can be configured to "fall-back" to the standard mode from the proximity detection mode when it fails to receive a "return to head" type control signal after a predetermined delay for example. The proximity detection mode could also be manually switched on or off by a user.

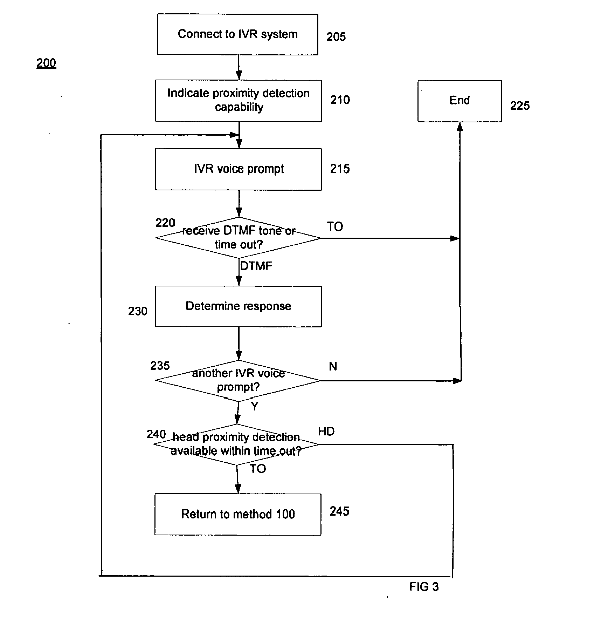

The system is described in more detail with respect to figure 3 which shows a flow chart for its method of operation. Following connection of a remote phone to the IVR server (205), the phone signals to the IVR server that it has (user ear or head) proximity detection capability (210), which allows the IVR server to modify how it runs the IVR service for this particular phone. As discussed above, this indication may be a suitable combination of DTMF tones recognised by the proximity module. The server then proceeds to issue an initial voice prompt (215) as normal. As with the method (100) of figure 2, the server then awaits a selection response from the phone, or a time out (220). If a time out if received (220TO) the method may end (225) or proceed in other ways outside the scope of this discussion. A selection response from the user (220DTMF) may be a key actuation causing the phone to issue a corresponding DTMF tone. An appropriate response to the user selection is determined (230), which may result in a new menu level requiring further voice prompts, or other actions as known, and not shown here for simplicity. If another voice prompt is required (235Y), the server and proximity module await a head detection or corresponding proximity condition signal from the phone (240). As discussed this might be a predetermined combination of DTMF tones.

If a head detection type signal is received (240HD), then the method (200) returns directly to the IVR voice prompt step (215) and issues the next voice prompt onto the audio channel for the user of the phone to listen to. This means that for a fast user, the next voice prompt is issued as soon as they return the phone to their ear, thereby speeding up the entire process. On the other hand, if no head detection signal is received within a given time out (240TO), the IVR server may revert to the method (100) used in figure 2 for phones without proximity detection capability. The time out (240TO) used in this proximity detection IVR method (200) can be considerably longer than the predetermined delay (135) used in the method (100) of figure 2. This allows for the possibility that a user of a phone with proximity detection may take longer to respond to voice prompts, for example because they have to juggle many items whilst using the IVR service. An example predetermined delay (135) for the "non-proximity" based method (100) of figure 2 might be 2 seconds, whereas the time out (240TO) for awaiting a head detection signal in the "proximity" based method (200) of figure 3 might be 10 seconds. Furthermore, by returning to the method (100) of figure 2, this allows for recovery from problems in operating the method (300) of figure 3, for example a sensor error at the phone; and therefore allows the user to revert to the normal (ie non-proximity based) IVR interaction. Alternatively the method (200) may return to the IVR prompt step (215), which would be useful in the situation where a head detection was signalled by the device but not received by the IVR server.

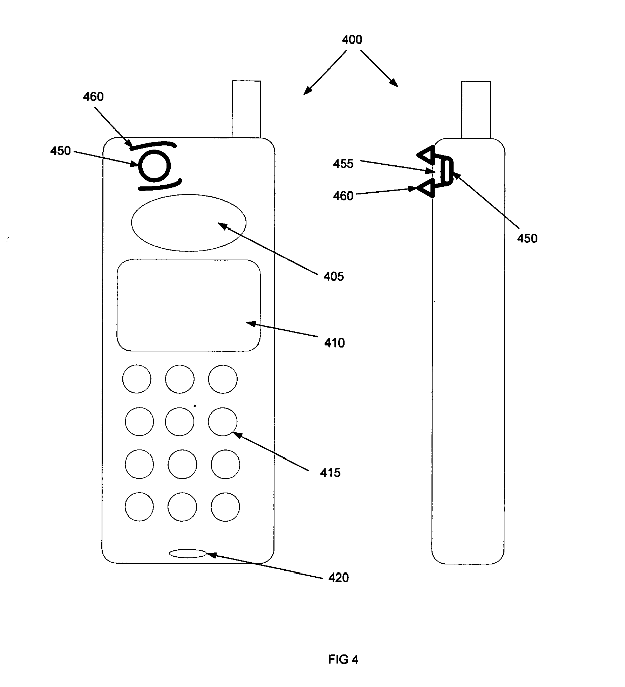

Figure 4 illustrates a phone according to an embodiment in more detail. The phone 400 is shown both in plan view and side view, and comprises a speaker 405, a display screen 410, keys 415, a microphone 420, and a proximity sensor 450. The proximity sensor 450 is located adjacent the speaker 405, and spaced apart from the keys 415. This reduces the likelihood of the sensor detecting fingers actuating the keys, as opposed to a head with ear adjacent the speaker 405.

In alternative arrangements however, the sensor 450 could be located anywhere on the phone if it and/or the associated proximity functionality was sufficiently "intelligent" to recognise a head as opposed to other objects such as fingers for example. This can be accomplished using system state determination by monitoring the IVR state or its voice prompts, and movements of the phone as discussed in greater detail further below.

The phone 400 may also comprise false detection avoidance measures or means such as a false detection avoidance structure having for example one or more ridges 460 and/or a recess 455 into which the proximity sensor is located. The ridges 460 are a user clue similar to those used on camera phones to try alert a user to avoid putting their fingers over the camera lens, or in this case the proximity sensor 450. Locating the sensor 450 in a recess 455 reduces the sensing angle of the sensor so that it only detects objects directly in front of it, which further reduces the likelihood of detecting nearby fingers, for example resting on the screen 410, or possibly even speaker 405. However positioning an ear against the speaker 405 would necessarily mean a part of the user's head was positioned directly in front of the opening of the sensor recess 455.

The sensor 450 may be any suitable proximity sensor, that is a sensor which is capable of determining whether an object is within a certain range; for example 5 cm. Determining a range threshold may require monitoring and interpretation of "raw" sensor output signal levels by the proximity functionality as is known. Example sensor types include infra-red and capacitance sensors, however other sensor types may alternatively be used.

Software or hardware based functionality (6 in figure 1) within the phone, can be configured to signal the IVR server when a change in proximity conditions is determined. For example the phone may monitor the sensor for changes corresponding to an object moving within a threshold range, or outside of it - for example a head moving away from the sensor which corresponds to the user moving the phone to a position where they can access the keys, and a head moving into the threshold range corresponding to the user moving the phone away from the key actuating position and back to a listening position.

The level of intelligence within the phone can vary from extremely limited, for example simply signalling changes in proximity condition, or sensor readings, to more sophisticated such as signalling a listening position or a key actuation position to the IVR server, possibly using in-band audio information such as DTMF signalling in response to key actuation by the user and/or the current state of the IVR service in terms of whether the IVR server has issued a voice prompt and is awaiting a response from the user. This may be combined with other sensor readings, for example rotation, orientation and movement sensors which together with the proximity sensor readings may provide more resilience against false detection of objects other than the user's head/ear; for example fingers during key actuation. The use of movement detectors in order to imply a proximity condition is discussed in more detail below.

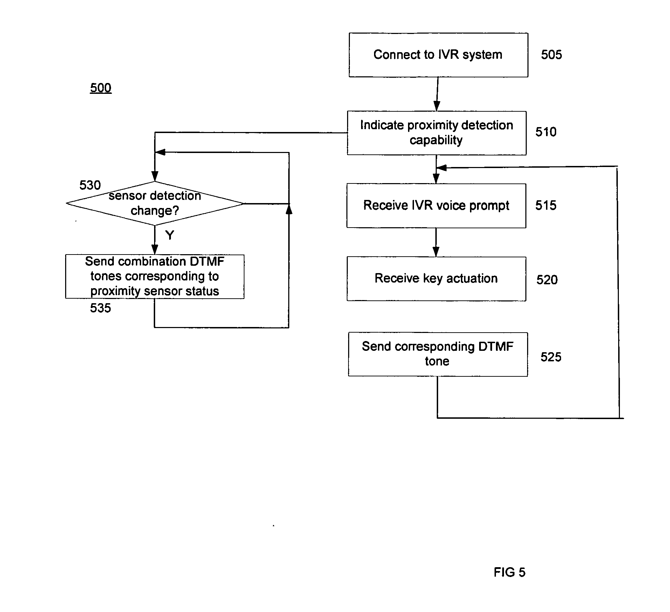

Figure 5 illustrates a method of implementing a proximity based IVR system on a suitably capable phone. The method (500) allows the receiving of and responding to IVR voice prompts to operate largely independently of the signalling of the determination of proximity condition states. Following connection to the IVR server (505), the method indicates to the IVR server that it is proximity detection capable (510). The method (500) then branches into two largely independent loops, one for providing the proximity information (530, 535), and one for responding to IVR voice prompts (515, 520, 525). The method receives IVR voice prompts (515) as normal, and awaits a user key actuation or other user selection response such as a voice commend (520). The phone sends a DTMF tone (525) on to the audio channel in response to one of its keys being actuated by the user. The method then returns to await further IVR voice prompts from the IVR server. Form simplicity of explanation, exiting strategies and various other features of standard IVR systems have not been included here, though they will be well known to those skilled in the art.

Meanwhile, the method (500) also monitors the proximity sensor for changes (530). These changes might correspond to a sensed object moving into or out of a threshold range from the sensor. This corresponds to a change in a proximity condition, for example from the user in a listening position with an ear adjacent the phone speaker, to the user in a key actuation position with the head away from the phone speaker. When such a change is detected (530Y), a proximity condition signal can be sent to the IVR server (535). As discussed previously, this signal may be a unique DTMF tone combination. Alternatively a signal may only be sent when the phone is returned to a listening position, all other changes in sensor readings or interpretation being ignored. This avoids the need to send proximity signals when the server might be expecting DTMF tones corresponding to user key actuations such as data entries of variable length. The method (500) then returns to monitoring for further sensor status or proximity condition changes (530). Again, whilst an exit from this loop has not been shown, it will be appreciated that an exit would occur once the IVR application on the other loop (515, 520, 525) has finished. This simple method (500) is cost effective and relies on a minimum of phone reconfiguration, with the intelligence for the proximity based IVR application residing primarily in the proximity module in the IVR server side of the system.

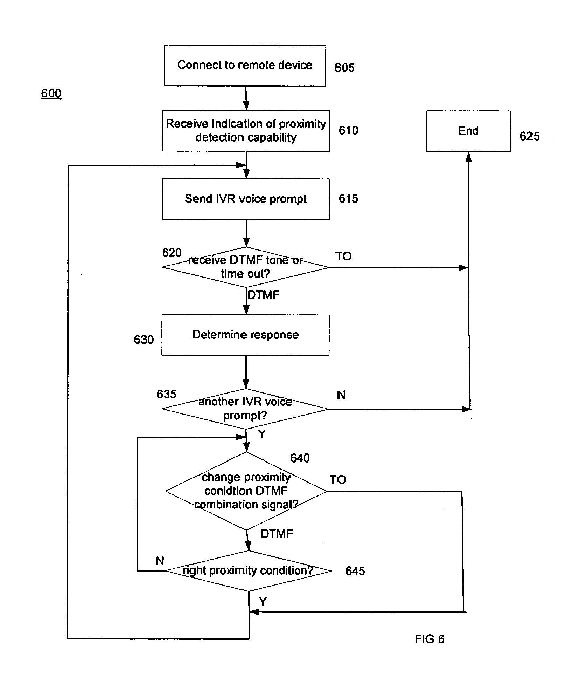

Figure 6 illustrates a corresponding method for implementing the IVR server and proximity module. Following connection with the remote phone (605), the server side method (600) receives an indication from the phone that it is proximity detection capable (610). This prompt causes the IVR server to reconfigure its standard IVR service method to incorporate the proximity based features discussed below. If such a proximity capable indication is not received, another method may be used. The IVR server then issues its first IVR voice prompt (615), and awaits a response from the user (620), for example in the form of a DTMF tone. Assuming such a tone is received (620Y), a corresponding IVR server response or next action is determined (630). If the response is another IVR voice prompt (635Y), then the method (600) awaits proximity related signalling from the phone (640). The IVR server includes logic or functionality to distinguish between user entered responses, for example a sequence of DTMF tones, and a proximity detection signal, which may also be implemented as a sequence of DTMF tones. This functionality may include parsing all received DTMF tone sequences for a predetermined tone sequence corresponding to the proximity detection signal, so that for example this tone sequence is not treated by the application as user entered data such as a customer or bank account number. The predetermined sequence of DTMF tones used for the proximity detection signal will be determined in order to distinguish it from possible user entered tone sequences, and will thus be dependent on the way in which the IVR application is configured.

If a proximity or combination DTMF signal is received (640DTMF), the method determines whether this signal relates to the appropriate proximity condition (645). An appropriate proximity condition signal is one corresponding to a user listening position, where the phone is adjacent the user's ear. This may be indicated from a change in the sensor status from "no nearby object", to "nearby object". If the appropriate proximity condition is determined (645Y), the method returns to the send IVR voice prompt step (615), which the user should be ready to receive. If the proximity condition detected is inappropriate (645N), then the method returns to awaiting a further proximity signal (640) in order to determine whether that will be the appropriate one. In this way all inappropriate proximity condition information is ignored.

If a proximity detection signal is received at an unexpected time, for example during playing a voice prompt, then the server may be configured to ignore this, or behave in some other way depending on system designer implementation goals, as would be understood by those skilled in the art.

An example of an inappropriate proximity condition signal would be that corresponding to an object moving away from the sensor. This might indicate for example that a finger has covered the sensor, but is now moving away whilst the phone is being re-orientated for listening. The next sensor status change or proximity condition change might then be detection of the user's head moving into the sensor's range threshold. Again this would be received by the IVR server as a proximity condition signal (640DTMF) which again would be interpreted by the server or proximity module (7 in figure 1). The interpretation or determination this time (645) may be that an appropriate proximity condition exists (645Y), in which case the method (600) moves directly on to the next voice prompt (615). If a proximity condition signal is not received within a time out period (645TO), then the method may proceed on to the next IVR voice prompt (615). This condition might correspond to the server not recognising a proximity signal sent by the phone, for example because of temporary noise on the line. Alternatively, the method may revert to a standard method that does not use head proximity information.

In an alternative arrangement, the phone may have sufficient intelligence to only signal a proximity condition corresponding to a listening position, in which case step 645 may be omitted.

Figure 7a illustrates listening and key actuation positions of a phone 1 held by a user 10. It can be seen that when the phone is in a listening position (upper diagram), the user's head is adjacent a proximity sensor 5 on the phone and therefore a listening position or appropriate proximity condition can be inferred. In a key actuation position (lower diagram), the user's head is away from the phone sensor 5, and so a key actuation position can be inferred.

Figure 7b illustrates the rotation movements the phone will go through, in addition to position translation, when moved by the user between the two positions of figure 7a. It can be seen that the user will likely rotate (Ry) the phone about the Y axis in turning the phone from the side of the head to the front of the head. The user will also likely rotate (Rx) the phone in the X axis when moving the phone from the head height level to about chest height, in order to angle the phone away from the user slightly to make the plane of the front of the phone more perpendicular to the user's direction of viewing. This maximises the apparent size of the keypad in order to more easily see and actuate the keys.

One or more of these expected rotation movements can be used alternatively or in addition to the above direct proximity sensing in order to infer the proximity of the head or ear of the user to the phone. These expected rotations would likely be the same or similar irrespective of the user's position, for example lying on a couch or standing up as in figure 7a. Additionally or alternatively, displacement movements (ie non-rotational) could be used to determine a change of states or proximity conditions. For example rotations Ry and Rx both within a range of rotations could be used, optionally with a distance displacement, in order to signal a change from key actuation mode to listening mode. Accelerometers could be used to detect these movements and rotations as would be appreciated by those skilled in the art. Suitable intelligence in the phone and/or the IVR server could then be used to interpret the received data in order to determine the current proximity condition. This may or may not be used together with IVR state information - for example waiting for a listening position proximity condition signal so expecting the next detected object to be the user's head. Such a comprehensive approach using multiple "clues" about the current or next likely status of the mobile device can be used to increase the system's robustness against false head detection.

Whilst the embodiments have been described with respect to an IVR system, other systems using an audio source and an electronics device for receiving audio information could alternatively be used, where there is a desire to control delivery of the audio information. For example, a user may have set up a lecture streaming session, which is only started when the system detects the right proximity condition, for example the phone against the user's ear. Furthermore the audio source may be signalled to pause or delay sending of further audio information when the phone is moved away from the user's ear; and then signalled to continue when the phone returns to the listening position.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as reprogrammable logic gate arrays. Similarly the code may comprise code for a hardware description language such as Verilog^{™} or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analogue array or similar device in order to configure analogue hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. A method of transmitting audio signals between an audio source and an electronics device having an audio transducer for transducing the audio signals for a user of the device, the method comprising:
forwarding a prompt control signal to the audio source in response to detecting a predetermined user proximity condition ;
forwarding the audio signals from the audio source to the electronics device in response to receiving the prompt control signal at the audio source.

2. A method according to claim 1, further comprising forwarding second audio signals from the audio source to the electronics device;
forwarding a user control response signal to the audio source in response to a user interaction with the electronics device.

3. A method according to claim 1 or 2, wherein the electronics device is a phone, the audio source is an interactive voice response system and the audio signals are voice prompts.

4. A method according to any one preceding claim, wherein detecting the predetermined user proximity condition comprises detecting an object within a predetermined range of the audio transducer.

5. A method according to any one preceding claim, wherein the prompt control signal is an in-band audio signal.

6. A method according to any one preceding claim, wherein detecting the proximity condition comprises detecting predetermined orientation and/or movement changes of the electronics device.

7. A system for transmitting audio signals, and comprising:
an audio source and an electronics device which receives audio signals from the audio source and comprises an audio transducer for transducing the audio signals for a user of the device;
means for forwarding a prompt control signal to the audio source in response to detecting a predetermined user proximity condition ;
means for forwarding the audio signals from the audio source to the electronics device in response to receiving the prompt control signal at the audio source.

8. A system according to claim 7, wherein the means for forwarding a prompt control signal to the audio source in response to detecting a predetermined user proximity condition comprises a sensor for detecting an object within a predetermined range of the audio transducer.

9. A system according to claim 8, wherein the device further comprises a false detection avoidance structure surrounding the sensor.

10. A system according to claim 9, wherein the false detection avoidance structure comprises raised ridges surrounding the sensor and/or a recess for locating the sensor.

11. A system according to any one of claims 7 to 10, further comprising:
means for forwarding second audio signals from the audio source to the electronics device;
means for forwarding a user control response signal to the audio source in response to a user interaction with the electronics device.

12. A method of controlling the transmission of audio signals between an audio source and an electronics device having an audio transducer for transducing the audio signals for a user of the device, the method comprising:
forwarding a prompt control signal to the audio source in response to detecting a predetermined user proximity condition;
receiving the audio signals from the audio source following the prompt control signal.

13. A method according to claim 12, further comprising:
receiving second audio signals from the audio source;
forwarding a user control response signal to the audio source in response to a user interaction with the electronics device;

14. A method of controlling the transmission of audio signals between an audio source and an electronics device having an audio transducer for transducing the audio signals for a user of the device, the method comprising:
forwarding first audio signals to the electronics device;
determining second audio signals for forwarding to the electronics device in response to receiving a user control response signal from the electronics device;
forwarding the second audio signals to the electronics device in response to receiving a predetermined prompt control signal from the electronics device.

15. An electronics device comprising:
an audio transducer for transducing audio signals received from an audio source for a user of the device;
means for forwarding a prompt control signal to the audio source in response to detecting a predetermined user proximity condition;
receiving the audio signals from the audio source following the prompt control signal.

16. An audio source for transmitting audio signals to an electronics device, the audio source comprising:
means for forwarding first audio signals to the electronics device;
means for determining second audio signals for forwarding to the electronics device in response to receiving a user control response signal from the electronics device;
means for forwarding the second audio signals to the electronics device in response to receiving a predetermined prompt control signal from the electronics device.

17. A processor readable carrier carrying processor code which when executed by a processor is arranged to carry out a method according to any one of claims 1 to 6, and 12 to 14.
